# EUROPEAN PATENT APPLICATION

(11) **EP 3 147 826 A1**
(43) Date of publication of application: **29.03.2017**
(21) Application number: 16165951.1
(22) Date of filing: 19.04.2016
(51) Int. Cl.: G06K 9/20, G06F 3/00, G05B 19/02, G06F 3/048

(54) **METHOD AND APPARATUS FOR CONTROLLING ELECTRONIC DEVICE**

(30) Priority: 28.09.2015 CN 201510627896
(71) Applicant: Xiaomi Inc., Beijing 100085 (CN)
(72) Inventor: ZHANG, Xiao, 100085 Haidian District (CN); SUN, Yongli, 100085 Haidian District (CN); GAO, Ziguang, 100085 Haidian District (CN)
(74) Representative: Sadler, Peter Frederick

(57) **Abstract**

A method and apparatus for controlling an electronic device are provided. The method for controlling the electronic device includes: acquiring (101) a target image; determining (102, 203) a device to be controlled by recognizing the target image; displaying (103) a control interface of the device to be controlled; and controlling (104, 206, 306) the device to be controlled to operate in response to detecting a control operation for the control interface.

## Description

### TECHNICAL FIELD

The present disclosure generally relates to the field of communication technology, and more particularly, to a method and apparatus for controlling an electronic device and a terminal.

### BACKGROUND

Along with the development of communication technology and smart homes, there have been emerging more and more intelligent devices with more functions, making people's daily life more convenient. Accordingly, how to control the numerous intelligent devices in a fast and convenient manner has been drawing more and more attention of users. In the related art, a software application (APP) for controlling an intelligent device may be installed in an smart terminal. Such an APP may provide different user interfaces corresponding to different intelligent devices, so that the corresponding intelligent device may be controlled through the user interface. However, it still requires searching for the corresponding intelligent device within the APP when many intelligent devices are present, which lacks convenience.

### SUMMARY

In order to overcome the existing problems in the related art, the present disclosure provides in embodiments a method and apparatus for controlling an electronic device, and a terminal.

According to a first aspect of embodiments of the present disclosure, there is provided a method for controlling an electronic device, including:
acquiring a target image;
determining a device to be controlled by recognizing the target image;
displaying a control interface of the device to be controlled; and
controlling the device to be controlled to operate in response to detecting a control operation for the control interface.

Optionally, acquiring the target image comprises:
activating an image acquiring device; and
acquiring the target image by the image acquiring device.

Optionally, determining the device to be controlled by recognizing the target image comprises:
extracting profile information of an object included in the target image from the target image using an image recognition algorithmalgorithm; and
determining the device to be controlled in accordance with the profile information.

Optionally, determining the device to be controlled by recognizing the target image comprises:
extracting barcode information of an object included in the target image from the target image using an image recognition algorithm; and
determining the device to be controlled in accordance with the barcode information.

Optionally, displaying the control interface of the device to be controlled comprises:
obtaining the control interface corresponding to the device to be controlled in accordance with a preset device correspondence in response to determining that the device to be controlled is recorded in the preset device correspondence between the device to be controlled and the control interface; and
displaying the control interface corresponding to the device to be controlled.

Optionally, determining the device to be controlled by recognizing the target image comprises: determining a component to be controlled in the device to be controlled by recognizing the target image; and displaying the control interface of the device to be controlled comprises: displaying a control interface of the component to be controlled.

Optionally, displaying the control interface of the component to be controlled comprises:
obtaining the control interface corresponding to the component to be controlled in accordance with a preset component correspondence in response to determining that the component to be controlled is recorded in the preset component correspondence between the component to be controlled and the control interface; and
displaying the control interface corresponding to the component to be controlled.

Optionally, controlling the device to be controlled to operate in response to detecting the control operation for the control interface comprises:
generating a control instruction corresponding to the control operation in response to detecting the control operation for the control interface; and
sending the control instruction to the device to be controlled, so as to trigger the device to be controlled to operate in accordance with the control instruction.

According to a second aspect of embodiments of the present disclosure, there is provided an apparatus for controlling an electronic device, including:
an image acquiring unit, configured to acquire a target image;
a device determining unit, configured to determine a device to be controlled by recognizing the target image acquired by the image acquiring unit;
an interface displaying unit, configured to display a control interface of the device to be controlled determined by the device determining unit; and
an operation controlling unit, configured to control the device to be controlled to operate in response to detecting a control operation for the control interface displayed by the interface displaying unit.

Optionally, the image acquiring unit comprises:
an activating sub-unit, configured to activate an image acquiring device; and
an acquiring sub-unit, configured to acquire the target image by the image acquiring device activated by the activating sub-unit.

Optionally, the device determining unit comprises:
a profile extracting sub-unit, configured to extract profile information of an object included in the target image from the target image using an image recognition algorithm; and
a first device determining sub-unit, configured to determine the device to be controlled in accordance with the profile information extracted by the profile extracting sub-unit.

Optionally, the device determining unit comprises:
a barcode extracting sub-unit, configured to extract barcode information of an object included in the target image from the target image using an image recognition algorithm; and
a second device determining sub-unit, configured to determine the device to be controlled in accordance with the barcode information extracted by the barcode extracting sub-unit.

Optionally, the interface displaying unit comprises:
a first obtaining sub-unit, configured to obtain the control interface corresponding to the device to be controlled in accordance with a preset device correspondence in response to determining that the device to be controlled is recorded in the preset device correspondence between the device to be controlled and the control interface; and
a first displaying sub-unit, configured to display the control interface corresponding to the device to be controlled obtained by the first obtaining sub-unit.

Optionally, the device determining unit comprises: a component determining sub-unit, configured to determine a component to be controlled in the device to be controlled by recognizing the target image; and the interface displaying unit comprises: a second displaying sub-unit, configured to display a control interface corresponding to the component to be controlled determined by the component determining sub-unit.

Optionally, the second displaying sub-unit comprises:
an obtaining module, configured to obtain the control interface corresponding to the component to be controlled in accordance with a preset component correspondence in response to determining that the component to be controlled is recorded in the preset component correspondence between the component to be controlled and the control interface; and
a displaying module, configured to display the control interface corresponding to the component to be controlled obtained by the obtaining module.

Optionally, the operation controlling unit comprises:
an instruction generating sub-unit, configured to generate a control instruction corresponding to the control operation in response to detecting the control operation for the control interface; and
an instruction sending sub-unit, configured to send the control instruction generated by the instruction generating sub-unit to the device to be controlled, so as to trigger the device to be controlled to operate in accordance with the control instruction.

According to a third aspect of embodiments of the present disclosure, there is provided a terminal, including:
a processor; and
a memory for storing instructions executable by the processor,
wherein the processor is configured to:
   acquire a target image;
   determine a device to be controlled by recognizing the target image;
   display a control interface of the device to be controlled; and
   control the device to be controlled to operate in response to detecting a control operation for the control interface.

The technical solution provided by embodiments of the present disclosure may have the following advantageous effects. The technical solution of the present disclosure may acquire the target image, and may display the control interface of the device to be controlled after the device to be controlled is determined by recognizing the target image. Such a control interface may enable the user to trigger the control operation on the intelligent device, so as to control the device to be controlled to operate, such that manual operations of the user may be reduced significantly, thereby accelerating speed of displaying the control interface of the intelligent device, and providing the user convenience.

The technical solution of the present disclosure may activate the image acquiring device and acquire the target image by the image acquiring device, which is easy to implement. The target image may be acquired by a simple operation from the user, thereby significantly reducing manual operations of the user, and providing the user greater convenience.

In the technical solution of the present disclosure, the profile information of the object included in the image may be extracted from the target image using the image recognition algorithm, so as to recognize the device to be controlled quickly, which is easy to be achieved with high accuracy.

In the technical solution of the present disclosure, the barcode information of the object included in the image may be extracted from the target image using the image recognition algorithm, so as to recognize the device to be controlled quickly, which is easy to be achieved with high accuracy.

The technical solution of the present disclosure may set different correspondences between the device to be controlled and the control interface in advance, one device to be controlled may correspond to one or more control interfaces, and different control interfaces may include different functions for the device to be controlled, so as to control the device more flexibly.

The technical solution of the present disclosure may further determine the component to be controlled in the device to be controlled in accordance with the target image, so as to display the control interface of the component to be controlled, thereby further providing the user a more delicate device controlling function, and thus facilitating the user to operate.

The technical solution may set different correspondences between the component to be controlled and the control interface in advance. Such a control interface may merely include a control function corresponding to the component to be controlled, so as to enable the control function provided by the control interface to be more specific, allowing the control interface to be more concise, and providing the user a more convenient operation.

With the technical solution of the present disclosure, when receiving the control operation from the user by the control interface, the control instruction may be generated and sent to the device to be controlled, so as to instruct the device to be controlled to operate in accordance with the control instruction accordingly, thereby improving the convenience of device control, and thus proving the user convenience.

It is to be understood that both the foregoing general description and the following detailed description are illustrative and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for controlling an electronic device according to an illustrative embodiment of the present disclosure.
Fig. 2A is a flow chart showing another method for controlling an electronic device according to an illustrative embodiment of the present disclosure.
Fig. 2B is a schematic diagram showing a correspondence between a smart fan and a control interface according to an illustrative embodiment of the present disclosure.
Fig. 2C is a schematic diagram showing an application scenario of a method for controlling an electronic device according to an illustrative embodiment of the present disclosure.
Fig. 3A is a flow chart showing another method for controlling an electronic device according to an illustrative embodiment of the present disclosure.
Fig. 3B is a schematic diagram showing an application scenario of another method for controlling an electronic device according to an illustrative embodiment of the present disclosure.
Fig. 4 is a block diagram illustrating an apparatus for controlling an electronic device according to an illustrative embodiment of the present disclosure.
Figs. 5-11 are block diagrams illustrating another apparatus for controlling an electronic device according to an illustrative embodiment of the present disclosure.
Fig. 12 is a block diagram showing an apparatus for controlling an electronic device according to an illustrative embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in the description of the present disclosure are merely for the purpose of describing specific embodiments, but should not be construed to limit the present disclosure. As used in the description of the present disclosure and the appended claims, "a", "said" and "the" in singular forms mean including plural forms, unless clearly indicated in the context otherwise. It should also be understood that, as used herein, the term "and/or" represents and contains any one and all possible combinations of one or more associated listed items.

It should be understood that terms such as "first," "second," and "third" are used herein for describing various information, but the information should not be limited by these terms. The terms are only used for distinguishing the information of the same type from each other. For example, first information may also be called second information, and similarly, the second information may also be called the first information, without departing from the scope of the present disclosure. As used herein, the term "if" may be construed to mean "when" or "upon" or "in response to determining".

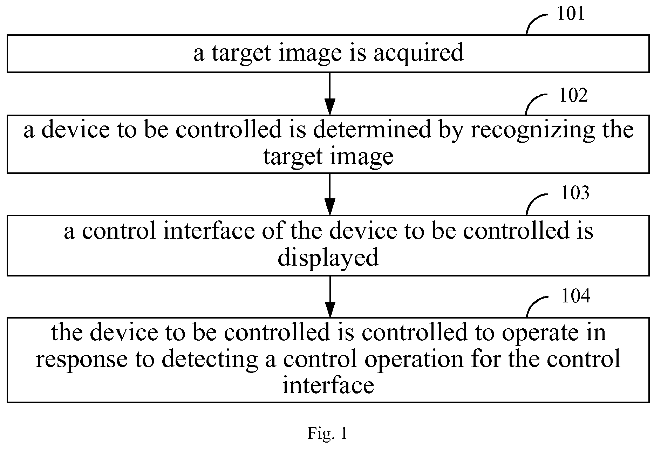

Fig. 1 is a flow chart showing a method for controlling an electronic device according to an illustrative embodiment. As shown in Fig. 1, the method applicable to a smart terminal includes the following steps 101 to 103.

In step 101, a target image is acquired.

In the present embodiment, the method may be applied to an intelligent environment provided with several intelligent devices, like a typical smart home environment. The intelligent device may include a smart fan, a smart air conditioner, an air cleaner and a smart power socket and the like. The method according to embodiments of the present disclosure may be implemented by a smart terminal in the intelligent environment. The smart terminal may be smart glasses, a smart phone, a tablet computer, a personal digital assistant (PDA) and the like.

The smart terminal according to embodiments of the present disclosure may have an image processing function. For example, the smart terminal may have an image storing function capable of storing a plurality of images; the smart terminal may be provided with an image acquiring device, such as a camera capable of acquiring an image in real time and taking a picture. Such a target image may be acquired from a photo gallery, or taken by activating the camera. For an instance, a user may activate the camera and aim at a device to be controlled when requiring controlling the electronic device, so that the smart terminal may acquire the target image currently including the device to be controlled.

In step 102, a device to be controlled is determined by recognizing the target image.

In an embodiment of the present disclosure, the device to be controlled may be recognized from the target image. For example, an object included in the target image may be recognized using an image recognition algorithm, so as to determine the device to be controlled.

In step 103, a control interface of the device to be controlled is displayed.

In an embodiment of the present disclosure, after the device to be controlled is recognized from the target image, the control interface of the device to be controlled is displayed automatically. Such a control interface corresponds to the device to be controlled, and may include one or more functions available for the user to trigger, so as to enable the user to trigger the control of the device to be controlled.

In step 104, the device to be controlled is controlled to operate in response to detecting a control operation for the control interface.

The control interface may provide one or more functions available for the user to trigger and configured for controlling the device to be controlled. For example, the control interface may include a switch option corresponding to respective physical button disposed at the device to be controlled. If the control operation for the control interface from the user is detected, the smart terminal may control the device to be controlled accordingly.

As can be seen from the above embodiment, the technical solution of the present disclosure may acquire the target image; and display the control interface of the device to be controlled after determining the device to be controlled by recognizing the target image. Such a control interface may enable the user to trigger the control operation on the intelligent device, so as to control the device to be controlled to operate. The technical solution of the present disclosure may reduce manual operations of the user, accelerate speed of displaying the control interface of the intelligent device, and provide the user convenience.

As for step 101, the smart terminal may acquire the target image by various ways. In an alternative embodiment, acquiring the target image may include:
activating an image acquiring device; and
acquiring the target image by the image acquiring device.

In the present embodiment, the image acquiring device, like a camera, may be integrated in the smart terminal. The user may trigger the smart terminal to activate the camera, like selecting a camera APP icon or other preset activating instructions in a user interface of the smart terminal, e.g., when detecting that a preset button for activating the camera is pressed by the user or a preset track is received, and the like. After the smart terminal activates the camera, the user interface of the smart terminal may display a picture taken by the camera at a current time, the user may enable the camera to aim at the device to be controlled, allowing the device to be controlled to be within a camera frame, such that the smart terminal may acquire the target image by the camera.

As can be seen from the above embodiment, the technical solution of the present disclosure is easy to be achieved, i.e., the target image may be acquired merely with a simple operation of the user, such that the manual operations of the user are reduced significantly, resulting in the higher convenience.

As for step 102, the smart terminal may determine the device to be controlled from the target image by various ways. For example, barcode information is disposed at the device to be controlled, such that the device to be controlled may be determined by recognizing the barcode information; or by recognizing various kinds of profile information of the intelligent device.

First way: the profile information of an object included in the target image is extracted from the target image using an image recognition algorithm, and the device to be controlled is determined in accordance with the profile information.

In general, the smart home environment may include various electronic devices, e.g., an air conditioner, a fan, a socket, or a lamp, etc. Different electronic devices are of different appearance, resulting in different profiles thereof with large differences. Accordingly, in an embodiment of the present disclosure, the profile information may be used as identification information for the electronic device, such that the corresponding device to be controlled may be determined accurately from the target image by means of the profile information.

The electronic device is generally provided with a plurality of functional components. For example, the smart power socket may be provided with a power button, a plurality of three-hole sockets, a plurality of two-hole sockets and a plurality of universal serial bus (USB) interfaces, etc.; the smart fan may be provided with a power button, a plurality buttons corresponding to different levels of wind scale and a swinging button, etc. Accordingly, the profile information may correspond to the profile of entire or part of the electronic device. In the present embodiment, the image recognition algorithm may be any existing algorithm for recognizing an object profile. During practical applications, various kinds of profile information may be preset in accordance with the appearance of the intelligent device, like setting profile information under different perspectives, including a front view, a left view or a right view of the intelligent device; or setting profile information corresponding to different components in the intelligent device, for recognizing the profile information of the object included in the target image.

As can be seen from the above embodiment, the device to be controlled may be recognized accurately by extracting the profile information of the object included in the image from the target image using the image recognition algorithm, which is easy to be achieved with high accuracy.

Second way, the barcode information of an object included in the target image is extracted from the target image using an image recognition algorithm, and the device to be controlled is determined in accordance with the barcode information.

In the present embodiment, the image recognition algorithm may be any existing algorithm for recognizing a barcode. A manufacturer of the electronic device may provide the barcode information at any position (e.g., an outer surface) of the electronic device during manufacturing the device. Such barcode information may be a one-dimension or two-dimension code, capable of recognizing the intelligent device uniquely. For example, the barcode information may record unique identification of the intelligent device, like a device code or a media access control (MAC) address, etc. Accordingly, the intelligent device may be recognized by acquiring image data of the intelligent device and detecting the barcode information.

As can be seen from the above embodiment, the device to be controlled may be recognized accurately by extracting the barcode information of the object included in the image from the target image using the image recognition algorithm, which is easy to be achieved with high accuracy.

As for step 103, after the device to be controlled is recognized, the control interface of the device to be controlled may be displayed. In an alternative embodiment, displaying the control interface of the device to be controlled may include:
obtaining the control interface corresponding to the device to be controlled in accordance with a preset device correspondence in response to determining that the device to be controlled is recorded in the preset device correspondence between the device to be controlled and the control interface; and
displaying the control interface corresponding to the device to be controlled.

In embodiments of the present disclosure, different correspondences between the device to be controlled and the control interface may be set in advance. One device to be controlled may correspond to one or more control interfaces, and different control interfaces may include different functions for the device to be controlled. For example, as provided with different components, i.e., provided with various kinds of physical buttons, the device to be controlled may correspond to different control interfaces, each of which may include different control functions. During practical applications, the control interface may be designed for different electronic devices and functions thereof accordingly.

As for step 104, in an alternative embodiment, controlling the device to be controlled to operate in response to detecting the control operation for the control interface may include:
generating a control instruction corresponding to the control operation in response to detecting the control operation for the control interface; and
sending the control instruction to the device to be controlled, so as to trigger the device to be controlled to operate in accordance with the control instruction.

The smart terminal displays the control interface of the device to be controlled on a display screen of the terminal. The user may perform the control operation in the control interface. When receiving the control operation by the control interface from the user, the control instruction may be generated and sent to the device to be controlled, so as to instruct the device to be controlled to operate in accordance with the control instruction accordingly.

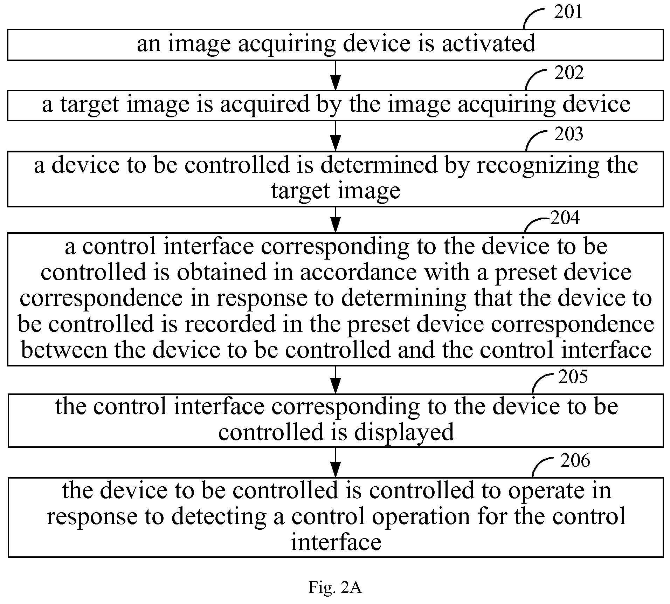

Fig. 2A is a flow chart showing another method for controlling an electronic device according to an illustrative embodiment of the present disclosure. Referring to Fig. 2A, the method applicable to a smart terminal includes the following steps 201 to 206.
In step 201, an image acquiring device is activated.
In step 202, a target image is acquired by the image acquiring device.
In step 203, a device to be controlled is determined by recognizing the target image.
In step 204, a control interface corresponding to the device to be controlled is obtained in accordance with a preset device correspondence in response to determining that the device to be controlled is recorded in the preset device correspondence between the device to be controlled and the control interface.
In step 205, the control interface corresponding to the device to be controlled is displayed.
In step 206, the device to be controlled is controlled to operate in response to detecting a control operation for the control interface.

In an embodiment of the present disclosure, a user may trigger the smart terminal to activate the image acquiring device, so as to acquire the target image of the device to be controlled. For example, for a smart phone, corresponding operations may be performed by single-clicking, clicking for predetermined times or long-pressing the target position in a user interface by the user, pressing a physical button of the terminal by the user in a predetermined pressing manner, or inputting a predetermined touch track at a target position in the user interface by the user; while for smart glasses, corresponding operations may be performed by clicking the sliding core region in each direction, blinking, swinging head, or voice controlling. Since the user may trigger the smart terminal rapidly to acquire the target image of the device to be controlled, thereby providing the user convenience.

The smart terminal activates the image acquiring device. The image acquiring device may be a camera integrated in the smart terminal. The user may hold the smart terminal in hand, enabling the camera disposed at the smart terminal to aim at an electronic device to be controlled, so as to acquire the target image acquired by the image acquiring device, thereby determining the device to be controlled through the target image subsequently. The target image is acquired by the above manner of activating the image acquiring device, so as to reduce the manual operations of the user, determine the device to be controlled rapidly, further accelerate the speed of displaying the control interface, and improve convenience of controlling the electronic device.

In the present embodiment, when the target image of the device to be controlled is acquired, the profile information of the object included may be extracted from the image data using the image recognition algorithm, and the corresponding device to be controlled is further determined in accordance with the profile information; or the device to be controlled may further be determined by extracting the barcode information using the image recognition algorithm.

In the present embodiment, the device correspondence between the device to be controlled and the control interface may be set in advance; and when it is determined that the device to be controlled is recorded in the device correspondence between the device to be controlled and the control interface set in advance, the control interface corresponding to the device to be controlled may be obtained in accordance with the device correspondence.

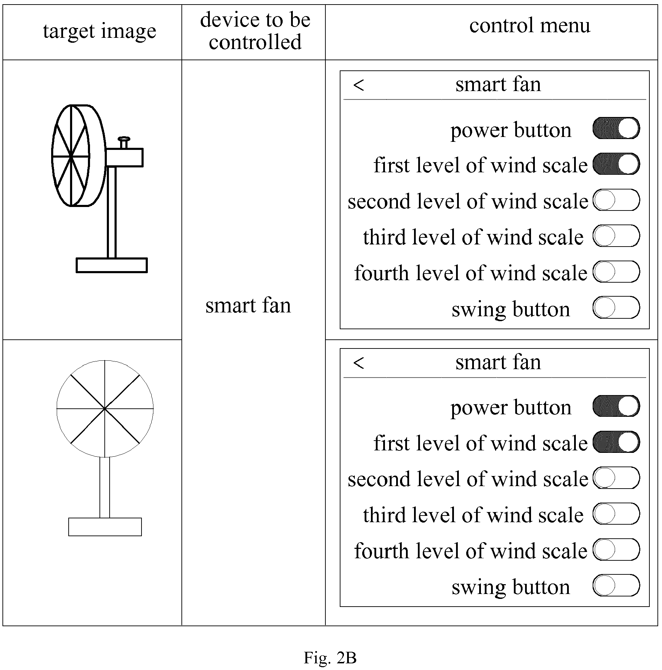

For example, Fig. 2B is a schematic diagram showing a correspondence between a smart fan and a control interface according to an illustrative embodiment of the present disclosure. In an embodiment as shown in Fig. 2B, a target image including a smart fan is demonstrated. For the target image in Fig. 2B, a right view of the smart fan is taken as an example, overall profile information of the smart fan may be recognized from the target image, and the device to be controlled may be determined as the smart fan in accordance with the profile information. The smart fan may correspond to a control interface including functions for controlling all the buttons. The control interface may include a control function corresponding to each physical button disposed at the smart fan. The control function corresponding to each physical button may be a control function corresponding to a button and for executing turning on or off.

In the embodiment as shown in Fig. 2B, another target image including a smart fan is also demonstrated. For the target image in the Fig. 2B, a front view of the smart fan is taken as an example, overall profile information of the smart fan is recognized from the target image, and the device to be controlled may be determined as the smart fan in accordance with the profile information. The smart fan may correspond to a control interface including functions for controlling all the buttons. The control interface may include a control function corresponding to each physical button disposed at the smart fan. The control function corresponding to each physical button may be a control function corresponding to a button and for executing turning on or off.

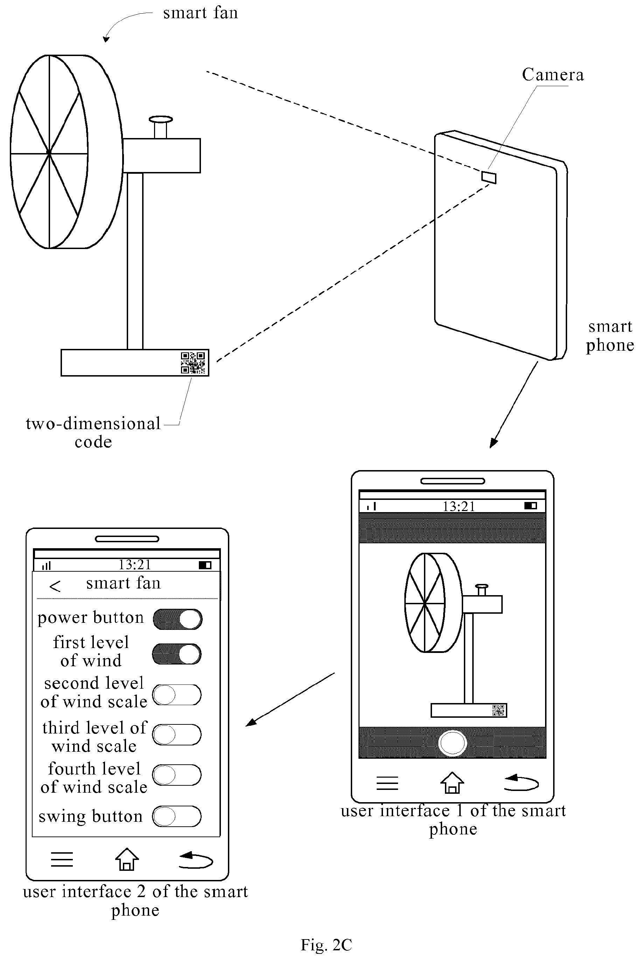

Fig. 2C is a schematic diagram showing an application scenario of a method for controlling an electronic device according to an illustrative embodiment of the present disclosure. The application scenario as shown in Fig. 2C includes one smart fan as the electronic device, and one smart phone as the smart terminal. The smart fan and the smart phone are connected wirelessly, and information transmission and interaction are conducted therebetween based on the wireless connection. It would be understood that, the smart fan is merely taken as an example for explaining the intelligent device in the present embodiment, and the smart phone is merely taken as an example for explaining the smart terminal. During practical applications, the intelligent device may also be other various devices such as a smart air conditioner, a smart socket and a smart electronic cooker; while the smart terminal may also be other various smart terminals such as a tablet computer or smart glasses.

In the application scenario as shown in Fig. 2C, the user may click a camera APP icon displayed on a display screen of the smart phone; accordingly the smart terminal activates the cameral integrated in the smart phone; as the user enables the camera to aim at the smart fan, it can be known from the user interface 1 of the smart phone in Fig. 2C that the smart phone is able to obtain the target image acquired by the camera. The smart phone extracts the overall profile information of the intelligent device from the target image using the image recognition algorithm or may extract the two-dimensional code information of the intelligent device from the image data using the image recognition algorithm, and then determines that the smart fan corresponds thereto in accordance with the profile information or the two-dimensional code information accordingly.

Because the correspondence between the smart fan and the control interface is preset in the smart phone, the corresponding control interface may be obtained. It can be known from the user interface 2 in the smart phone as shown in Fig. 2C, a control interface of the smart fan is displayed on the display screen of the smart phone. Such a control interface includes all control functions corresponding to all buttons disposed at the smart fan.

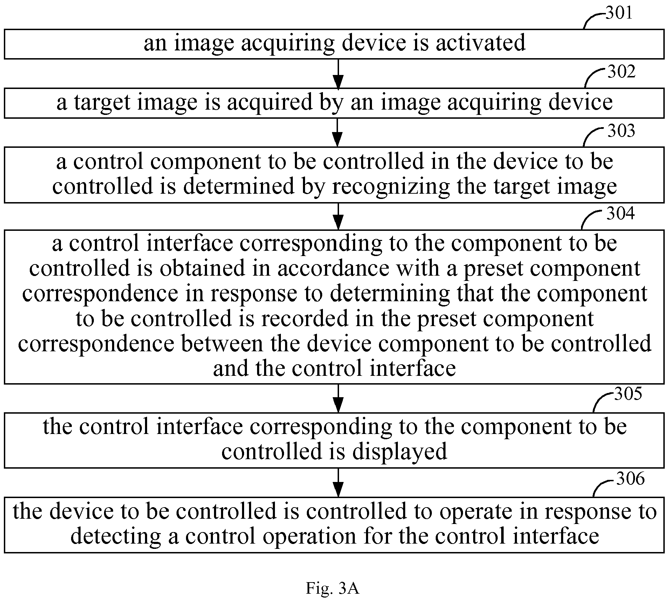

Fig. 3A is a flow chart showing another method for controlling an electronic device according to an illustrative embodiment of the present disclosure. Referring to Fig. 3A, the method applicable to the smart terminal includes the following steps 301 to 306.
In step 301, an image acquiring device is activated.
In step 302, a target image is acquired by an image acquiring device.
In step 303, a control component to be controlled in the device to be controlled is determined by recognizing the target image.
In step 304, a control interface corresponding to the component to be controlled is obtained in accordance with a preset component correspondence in response to determining that the component to be controlled is recorded in the preset component correspondence between the component to be controlled and the control interface.
In step 305, the control interface corresponding to the component to be controlled is displayed.
In step 306, the device to be controlled is controlled to operate in response to detecting a control operation for the control interface.

In embodiments of the present disclosure, after the device to be controlled is determined in accordance with the target image, the component to be controlled in the device to be controlled may be further determined. For example, when the camera of the terminal aims at a partial region of the electronic device (such a partial region includes some physical buttons of the device), the terminal recognizes partial profile information of the electronic device from the target image acquired, determines the device to be control and the component to be control therein in accordance with the partial profile information, and further displays a corresponding control interface in accordance with the component to be controlled. Such a control interface may merely include a control function corresponding to the component to be controlled, so as to enable the control function provided by the control interface to be more specific, thereby allowing the control interface more concise, and providing the user a more convenient operation.

It should be noted that a difference between the present embodiment and the embodiment as shown in Fig. 2A lies in that the latter only determines the device to be controlled and determines the corresponding control interface in accordance with the device to be controlled; while the present embodiment may further determine the component to be controlled after determining the device to be controlled, and further determine the control interface corresponding to the component to be controlled. During practical applications, for the embodiment as shown in Fig. 2A, as only determining the device to be controlled, the control interface to be displayed may include the control function of all components in the device to be controlled. For the present embodiment, the component to be controlled may be further determined after the device to be controlled is determined, so as to display the control interface corresponding to the component to be controlled. For example, in the case of presenting all components of the device, the target image may correspond to a control interface including control functions of all components; while in the case of merely presenting some components of the device, the target image may correspond to a control interface including control functions of some components.

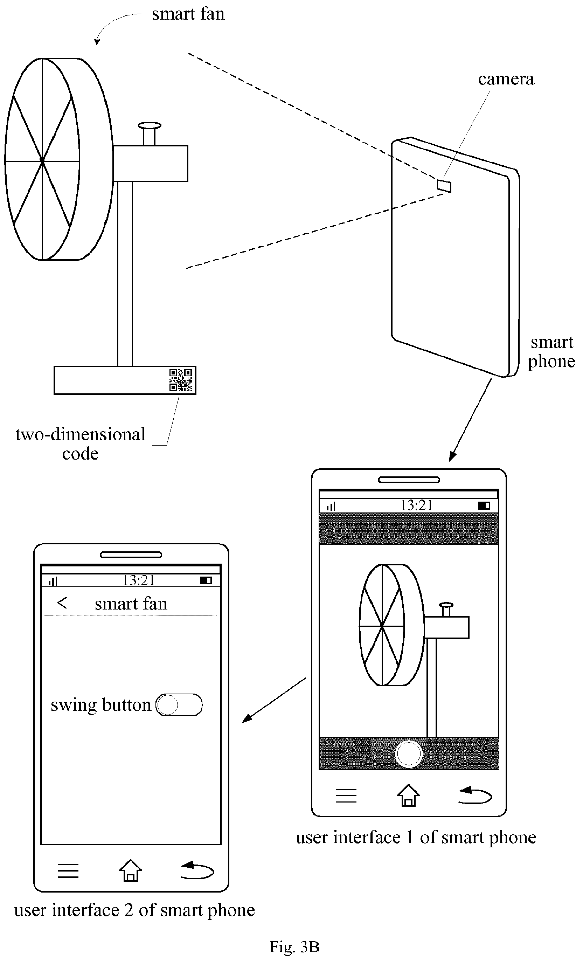

For example, Fig. 3B is a schematic diagram showing an application scenario of another method for controlling an electronic device according to an illustrative embodiment of the present disclosure. In the application scenario as shown in Fig. 3B, the user enables the camera of the smart phone to aim at a region corresponding to the swing head button of the smart fan, it can be seen from the user interface 1 of the smart phone in Fig. 3B that, the smart phone acquires the target image acquired by the camera. The smart phone extracts the profile information corresponding to the partial region of the device to be controlled from the image data using the image recognition algorithm, and further determines that the device to be controlled is the smart fan and the component to be controlled is the swinging button in accordance with the profile information.

As a correspondence between the profile information and the control interface is preset in the smart phone, in the case of a swinging button, the component to be controlled may correspond to a control interface merely including one control function of the swinging button. Such a control function of the swinging button may be a control function corresponding to the swinging button and for executing turning on or off.

As can be seen from the user interface 2 of the smart phone in Fig. 3B that, the display screen of the smart phone displays a control interface of the smart fan. Such a control interface merely includes the control function of the swinging button disposed at the smart fan.

Corresponding to the above embodiments illustrating the method for controlling the electronic device, the present disclosure further provides in embodiments an apparatus for controlling the electronic device.

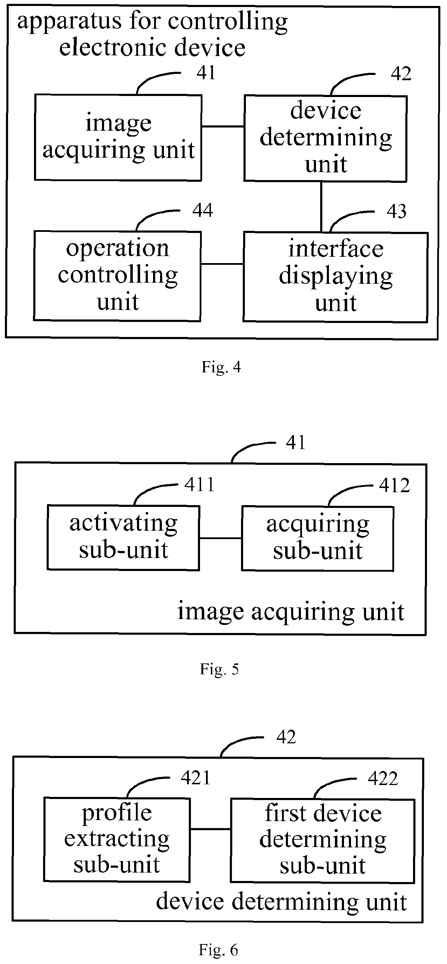

Fig. 4 is a block diagram illustrating an apparatus for controlling an electronic device according to an illustrative embodiment of the present disclosure. Referring to Fig. 4, the apparatus includes: an image acquiring unit 41, a device determining unit 42, an interface displaying unit 43 and an operation controlling unit 44.

The image acquiring unit 41 is configured to acquire a target image.

The device determining unit 42 is configured to determine a device to be controlled by recognizing the target image acquired by the image acquiring unit 41.

The interface displaying unit 43 is configured to display a control interface of the device to be controlled determined by the device determining unit 42.

The operation controlling unit 44 is configured to control the device to be controlled to operate in response to detecting a control operation for the control interface displayed by the interface displaying unit 43.

As can be seen from the above embodiment, the technical solution of the present disclosure may acquire the target image, and display the control interface of the device to be controlled after the device to be controlled is determined by recognizing the target image. The control interface may enable the user to trigger the control operation on the intelligent device, and thereby controlling the device to be controlled to operate. The technical solution of the present disclosure may reduce the manual operations of the user, accelerate the speed of displaying the control interface of the intelligent device, and provide the user convenience.

Fig. 5 is a block diagram illustrating another apparatus for controlling an electronic device according to an illustrative embodiment of the present disclosure. Referring to Fig. 5, in the present embodiment, on the basis of the above embodiment as shown in Fig. 4, the image acquiring unit 41 includes an activating sub-unit 411 and an acquiring sub-unit 412.
The activating sub-unit 411 is configured to activate an image acquiring device.
The acquiring sub-unit 412 is configured to acquire the target image by the image acquiring device activated by the activating sub-unit 411.

As can be seen from the above embodiment, the technical solution of the present disclosure may activate the image acquiring device to acquire the target image by the image acquiring device, which is easy to be achieved, the target image may be acquired merely with a simple operation of the user, thereby significantly reducing manual operations of the user, and providing the user greater convenience.

Fig. 6 is a block diagram illustrating another apparatus for controlling an electronic device according to an illustrative embodiment of the present disclosure. Referring to Fig. 6, in the present embodiment, on the basis of the above embodiment as shown in Fig. 4, the device determining unit 42 includes a profile extracting sub-unit 421 and a first device determining sub-unit 422.

The profile extracting sub-unit 421 is configured to extract profile information of an object included in the target image from the target image using an image recognition algorithm.

The first device determining sub-unit 422 is configured to determine the device to be controlled in accordance with the profile information extracted by the profile extracting sub-unit 421.

As can be seen from the above embodiment, the profile information of the object included in the image is extracted from the target image using the image recognition algorithm, so as to recognize the device to be controlled accurately, which is easy to be achieved with high accuracy.

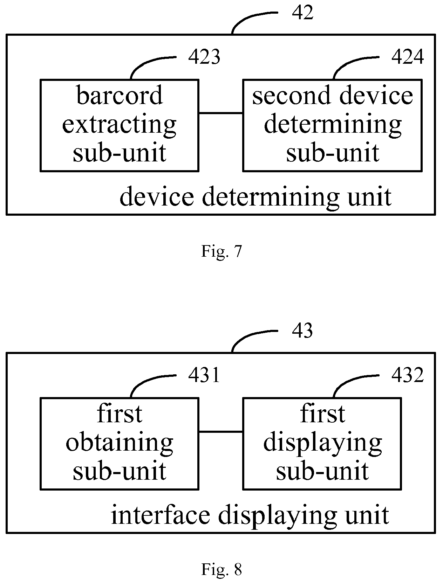

Fig. 7 is a block diagram illustrating another apparatus for controlling an electronic device according to an illustrative embodiment of the present disclosure. Referring to Fig. 7, in the present embodiment, on the basis of the above embodiment as shown in Fig. 4, the device determining unit 42 includes a barcode extracting sub-unit 423 and a second device determining sub-unit 424.

The barcode extracting sub-unit 423 is configured to extract barcode information of an object included from the target image using an image recognition algorithm.

The second device determining sub-unit 424 is configured to determine the device to be controlled in accordance with the barcode information extracted by the barcode extracting sub-unit 423.

As can be seen from the above embodiment, the barcode information of the object included in the image is extracted from the target image using the image recognition algorithm, so as to recognize the device to be controlled accurately, which is easy to be achieved with high accuracy.

Fig. 8 is a block diagram illustrating another apparatus for controlling an electronic device according to an illustrative embodiment of the present disclosure. Referring to Fig. 8, in the present embodiment, on the basis of the above embodiment as shown in Fig. 4, the interface displaying unit 43 includes a first obtaining sub-unit 431 and a first displaying sub-unit 432.

The first obtaining sub-unit 431 is configured to obtain the control interface corresponding to the device to be controlled in accordance with a preset device correspondence in response to determining that the device to be controlled is recorded in the preset device correspondence between the device to be controlled and the control interface.

The first displaying sub-unit 432 is configured to display the control interface corresponding to the device to be controlled obtained by the first obtaining sub-unit 431.

As can be seen from the above embodiment, the technical solution of the present disclosure may preset different correspondences between the device to be controlled and the control interface, one device to be controlled may correspond to one or more control interfaces, and different control interfaces may include different functions for the device to be controlled, so as to control the device more flexibly.

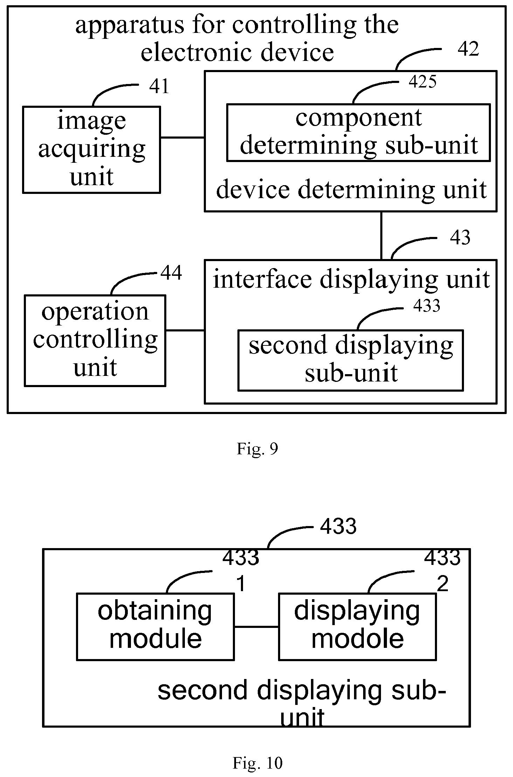

Fig. 9 is a block diagram illustrating another apparatus for controlling an electronic device according to an illustrative embodiment of the present disclosure. Referring to Fig. 9, in the present embodiment, on the basis of the above embodiment as shown in Fig. 4, the device determining unit 42 includes a component determining sub-unit 425, configured to determine a component to be controlled in the device to be controlled by recognizing the target image.

The interface displaying unit 43 includes a second displaying sub-unit 433, configured to display a control interface corresponding to the component to be controlled determined by the component determining sub-unit 425.

As can be seen from the above embodiment, the technical solution of the present disclosure may further determine the component to be controlled in the device to be controlled in accordance with the target image, so as to display the control interface corresponding to the component to be controlled, thereby further providing the user a more delicate device controlling function, and thus facilitating the user to operate.

Fig. 10 is a block diagram illustrating another apparatus for controlling an electronic device according to an illustrative embodiment of the present disclosure. Referring to Fig. 10, in the present embodiment, on the basis of the above embodiment as shown in Fig. 9, the second displaying sub-unit 433 includes an obtaining module 4331 and a displaying module 4332.

The obtaining module 4331 is configured to obtain the control interface corresponding to the component to be controlled in accordance with a preset component correspondence in response to determining that the component to be controlled is recorded in the preset component correspondence between the component to be controlled and the control interface.

The displaying module 4332 is configured to display the control interface corresponding to the component to be controlled obtained by the obtaining module 4331.

As can be seen from the above embodiment, the technical solution of the present disclosure may set different correspondences between the component to be controlled and the control interface in advance. Such a control interface may merely include a control function corresponding to the component to be controlled, so as to enable the control function provided by the control interface to be more specific, thereby allowing the control interface to be more concise, and providing the user a more convenient operation.

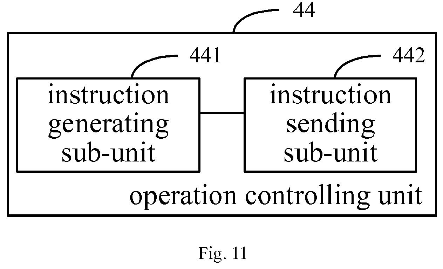

Fig. 11 is a block diagram illustrating another apparatus for controlling an electronic device according to an illustrative embodiment of the present disclosure. Referring to Fig. 11, in the present embodiment, on the basis of the above embodiment as shown in Fig. 4, the operation controlling unit 44 includes an instruction generating sub-unit 441 and an instruction sending sub-unit 442.

The instruction generating sub-unit 441 is configured to generate a control instruction corresponding to a control operation in response to detecting the control operation for the control interface.

The instruction sending sub-unit 442 is configured to send the control instruction generated by the instruction generating sub-unit 441 to the device to be controlled, so as to trigger the device to be controlled to operate in accordance with the control instruction.

As can be seen from the above embodiment, with the technical solution of the present disclosure, when receiving the control operation by the control interface from the user, the control instruction may be generated and sent to the device to be controlled, so as to instruct the device to be controlled to operate in accordance with the control instruction accordingly, thereby improving convenience of device control, and thus proving the user convenience.

Accordingly, the present disclosure further provides in embodiments a terminal including:
a processor; and
a memory for storing instructions executable by the processor,
in which the processor is configured to
acquire a target image;
determine a device to be controlled by recognizing the target image;
display a control interface of the device to be controlled; and
control the device to be controlled to operate in response to detecting a control operation for the control interface.

Specific procedural for achieving functions and effects of various modules in the above device may refer to the procedural for achieving corresponding steps in the above method, which is not elaborated herein

With respect to the devices in the above embodiments, the specific manners for performing operations for individual modules therein have been described in detail in the embodiments regarding the methods for controlling the electronic device, which will not be elaborated herein. The above described device embodiments are merely illustrative, a unit or module described as a separate component may be or not be separated physically, a component displayed as a unit or module may be or not be a physical unit, i.e., may be located at one position, or distributed in a plurality of network elements. The object of the present disclosure may be achieved by selecting all or part of the modules as practical required. It would be appreciated and implemented by those skilled in the art without creative labor work.

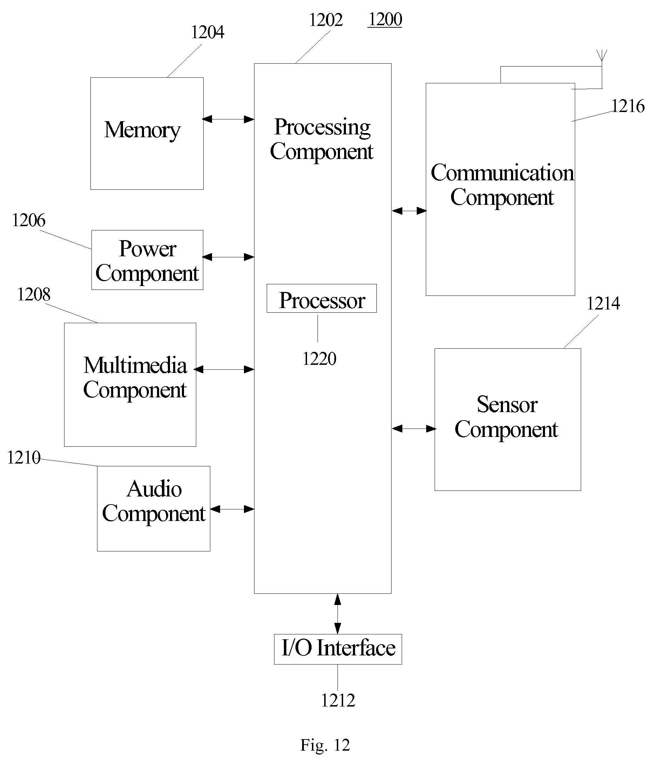

Fig. 12 is a block diagram illustrating an apparatus 1200 for controlling an electronic device according to an illustrative embodiment of the present disclosure. For example, the apparatus 1200 may be a mobile phone; a computer; a digital broadcast terminal; a message receiving and sending device; a gaming console, a tablet device, a medical device, exercise equipment, a personal digital assistant, having a routing function.

Referring to Fig. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, information, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the apparatus 1200 and other devices. The apparatus 1200 can access a wireless network based on a communication standard, such as WiFi, 2G, or 3G, or a combination thereof. In one illustrative embodiment, the communication component 1216 receives a broadcast signal or broadcast associated information from an external broadcast management system via a broadcast channel. In one illustrative embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is also provided a non-transitory computer-readable storage medium including instructions, such as included in the memory 1204, executable by the processor 1220 in the apparatus 1200, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a terminal, causes the terminal to perform a method for controlling an electronic device, the method including:
acquiring a target image;
determining a device to be controlled by recognizing the target image;
displaying a control interface of the device to be controlled; and
controlling the device to be controlled to operate in response to detecting a control operation for the control interface.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for controlling an electronic device, comprising:
acquiring (101) a target image;
determining (102, 203) a device to be controlled by recognizing the target image;
displaying (103) a control interface of the device to be controlled; and
controlling (104, 206, 306) the device to be controlled to operate in response to detecting a control operation for the control interface.

2. The method according to claim 1, wherein acquiring (101) the target image comprises:
activating (201, 301) an image acquiring device; and
acquiring (202, 302) the target image by the image acquiring device.

3. The method according to claim 1 or 2, wherein determining (102, 203) the device to be controlled by recognizing the target image comprises:
extracting profile information of an object included in the target image from the target image using an image recognition algorithm; and
determining the device to be controlled in accordance with the profile information.

4. The method according to any preceding claim, wherein determining (102, 203) the device to be controlled by recognizing the target image comprises:
extracting barcode information of an object included in the target image from the target image using an image recognition algorithm; and
determining the device to be controlled in accordance with the barcode information.

5. The method according to any preceding claim, wherein displaying (103) the control interface of the device to be controlled comprises:
obtaining (204) the control interface corresponding to the device to be controlled in accordance with a preset device correspondence in response to determining that the device to be controlled is recorded in the preset device correspondence between the device to be controlled and the control interface; and
displaying (205) the control interface corresponding to the device to be controlled.

6. The method according to any preceding claim, wherein
determining (102, 203) the device to be controlled by recognizing the target image comprises: determining a component to be controlled in the device to be controlled by recognizing the target image; and
displaying (103) the control interface of the device to be controlled comprises:
displaying a control interface of the component to be controlled.

7. The method according to claim 6, wherein displaying (103) the control interface of the component to be controlled comprises:
obtaining (304) the control interface corresponding to the component to be controlled in accordance with a preset component correspondence in response to determining that the component to be controlled is recorded in the preset component correspondence between the component to be controlled and the control interface; and
displaying (305) the control interface corresponding to the component to be controlled.

8. The method according to any one of claims 1 to 7, wherein controlling (104, 206, 306) the device to be controlled to operate in response to detecting the control operation for the control interface comprises:
generating a control instruction corresponding to the control operation in response to detecting the control operation for the control interface; and
sending the control instruction to the device to be controlled, so as to trigger the device to be controlled to operate in accordance with the control instruction.

9. An apparatus for controlling an electronic device, comprising:
an image acquiring unit (41), configured to acquire a target image;
a device determining unit (42), configured to determine a device to be controlled by recognizing the target image acquired by the image acquiring unit;
an interface displaying unit (43), configured to display a control interface of the device to be controlled determined by the device determining unit; and
an operation controlling unit (44), configured to control the device to be controlled to operate in response to detecting a control operation for the control interface displayed by the interface displaying unit.

10. The apparatus according to claim 9, wherein the image acquiring unit (41) comprises:
an activating sub-unit (411), configured to activate an image acquiring device; and
an acquiring sub-unit (412), configured to acquire the target image by the image acquiring device activated by the activating sub-unit.

11. The apparatus according to claim 9, wherein
the device determining unit (42) comprises:
a profile extracting sub-unit (421), configured to extract profile information of an object included in the target image from the target image using an image recognition algorithm; and
a first device determining sub-unit (422), configured to determine the device to be controlled in accordance with the profile information extracted by the profile extracting sub-unit;
and/or
the device determining unit (42) comprises:
a barcode extracting sub-unit (423), configured to extract barcode information of an object included in the target image from the target image using an image recognition algorithm; and
a second device determining sub-unit (424), configured to determine the device to be controlled in accordance with the barcode information extracted by the barcode extracting sub-unit..

12. The apparatus according to claim 9, wherein the interface displaying unit (43) comprises:
a first obtaining sub-unit (431), configured to obtain the control interface corresponding to the device to be controlled in accordance with a preset device correspondence in response to determining that the device to be controlled is recorded in the preset device correspondence between the device to be controlled and the control interface; and
a first displaying sub-unit (432), configured to display the control interface corresponding to the device to be controlled obtained by the first obtaining sub-unit.

13. The apparatus according to any of claims 9 to 12, wherein
the device determining unit (42) comprises: a component determining sub-unit (425), configured to determine a component to be controlled in the device to be controlled by recognizing the target image; and
the interface displaying unit (43) comprises: a second displaying sub-unit (433), configured to display a control interface corresponding to the component to be controlled determined by the component determining sub-unit.

14. The apparatus according to claim 13, wherein the second displaying sub-unit (433) comprises:
an obtaining module (4331), configured to obtain the control interface corresponding to the component to be controlled in accordance with a preset component correspondence in response to determining that the component to be controlled is recorded in the preset component correspondence between the component to be controlled and the control interface; and
a displaying module (4332), configured to display the control interface corresponding to the component to be controlled obtained by the obtaining module.

15. The apparatus according to any one of claims 9 to 14, wherein the operation controlling unit (44) comprises:
an instruction generating sub-unit (441), configured to generate a control instruction corresponding to the control operation in response to detecting the control operation for the control interface; and
an instruction sending sub-unit (442), configured to send the control instruction generated by the instruction generating sub-unit to the device to be controlled, so as to trigger the device to be controlled to operate in accordance with the control instruction.
